Europäisches Patentamt

(19) European Patent Office

Office européen des brevets

(11) Publication number: **0 458 760 A1**

## (12) EUROPEAN PATENT APPLICATION

(21) Application number: **91830193.8**

(22) Date of filing: **10.05.91**

(51) Int. Cl.⁵: **C02F 3/30, C02F 3/12**

(30) Priority: **18.05.90 IT 4797690**

(43) Date of publication of application:
**27.11.91 Bulletin 91/48**

(84) Designated Contracting States:
**AT BE CH DE DK ES FR GB GR IT LI LU NL SE**

(71) Applicant: **FOSFLEX s.r.l.**
**Via Barberini, 29**
**I-00187 Roma (IT)**

(72) Inventor: **Versfeld, Alexander William**
**c/o FOSFLEX s.r.l., Via Barberini, 29**
**I-00187 Roma (IT)**

(74) Representative: **Lanzoni, Luciano et al**
**c/o Bugnion S.p.A. Piazza dei Re di Roma, 21**
**I-00183 Roma (IT)**

(54) **A process and plant for the biological purification of sewage.**

(57) In a continuous process for the purification of sewage by biological means, with or without primary sedimentation (SP), fermented matter is elutriated in the flow of raw or settled sewage (W) directed into a first stage of treatment in an unaerated tank (2), thence into a second stage of treatment in an aerobic tank (3), and thereafter to secondary sedimentation and clarification tanks (SS); the unaerated tank (2) is divided into anaerobic and anoxic sub-environments, each of which divided in turn into diversified treatment sectors (6), sludge is recycled (S) back from secondary sedimentation and clarification (SS) into one of the treatment sectors (6) of the unaerated tank (2), separately from the flow of sewage (W), and liquids (L) are recycled (A) from the aerobic tank (3) likewise into one of the unaerated treatment sectors (6).

EP 0 458 760 A1

FIG. 1

The present invention relates to a biological process, and to plant, for the purification of sewage, that is to say, soiled liquids discharged from dwellings and/or industrial effluents which contain pollutants carried in the form of organic, nitrogenous, phosphorated and other substances. The process and plant disclosed are embraced by the art field of activated sludge treatment.

To enable the efficient removal of phosphorus from sewage by biological means, a preliminary analysis must be effected to establish the concentration of volatile fatty acids, the overall nitrogen content, the chemical oxygen demand and the total quantity of phosphorus in the raw incoming liquids.

Activated sludge systems are designed specifically to remove phosphorus, nitrogen and other common organic pollutants from sewage by a biological process. It is acknowledged that the extraction of phosphorus can be stepped up by exploiting the natural tendency of certain bacteria to gather in large quantities of polyphosphates by intracellular accumulation. Accordingly, to set up an activated sludge plant with optimum phosphorus extraction capacities, conditions must be created within the system which favour the profileration and growth of these bacteria in preference to those not naturally possessing the ability to absorb large quantities of polyphosphates intracellularly.

To enhance the biological extraction of phosphorus, polyphosphatic organisms need to grow, preferably, on a substrate of lower, i.e. short chain fatty acids in anaerobic conditions, that is to say, in an environment free from oxygen and nitrates. Given anaerobic conditions and the presence of lower fatty acids, such polyphosphatic organisms can break down or hydrolize polyphosphate chains, releasing phosphate into the surrounding liquid; thus one obtains the release of phosphate occurring in an anaerobic environment.

The bond energy liberated in this way is used to absorb, complexify and store up lower fatty acids within the organism, which thus sequesters the substrate for its own exclusive use on entering an environment containing collectors of external electrons. The polyphosphatic organisms utilize the sequestered substrate both to promote growth, and as a means by which to replenish their reserves of polyphosphates by extracting phosphate from the surrounding medium; this occasions the intake of excess phosphate, occurring in anoxic and aerobic environments.

More exactly, where sewage may contain substantial amounts of industrial waste and the concentration of short chain fatty acids is already high, such fermentation is not required; rather, fermentation becomes necessary when the concentration of short chain fatty acids is relatively low, for example as in sewage containing prevalently domestic waste.

Accordingly, to favour the growth of polyphosphatic organisms, it is necessary to create an anaerobic environment with a high concentration of fatty acids, and an aerobic environment that will enable the intake of phosphate.

By reason of the fact that domestic sewage does not generally contain high concentrations of lower fatty acids, a significantly greater efficiency in extraction of the phosphorus is gained by boosting the anaerobic treatment environment with additional short chain fatty acids generated externally of the reactor.

In this instance, primary sedimentation tanks are used to favour the production of lower fatty acids by fermentation; more exactly, the underflow or sediment produced in the primary sedimentation tank is discharged into a gravity thickener, and a part of the thickened solids then recycled back into the sedimentation tank, in such a way as to create a bed of sludge.

With biological fermentation taking place in the bed of sludge, both in the sedimentation tank and in the gravity thickener, a high concentration of lower fatty acids is achieved.

The products of fermentation thus obtained, both from primary sedimentation and by thickening, are then elutriated by being recycled into the flow of settled sewage entering the anaerobic sector of the reactor.

In activated sludge processes, short chain fatty acids are easily biodegraded by bacterial action in the presence of a collector of electrons such as oxygen and nitrate. Thus, to maintain the requisite high concentration of lower fatty acids in the anaerobic environment, the admission of oxygen and nitrate must be minimized. Moreover, the unaerated fraction of the mass of sludge in process must not be excessive; indeed, the greater the unaerated part, the greater the risk of filamentary organisms proliferating within and increasing the bulk of the sludge, reducing its sedimentation properties and occasioning less than satisfactory operation of the secondary clarifying stages. Furthermore, too large a proportion of unaerated sludge will negatively influence the growth rate of aerobic bacteria by which ammonia in the sewage is nitrified.

This is a factor which can adversely affect the effectiveness of the process, at low temperature especially; accordingly, the treatment system must incorporate some suitable means of matching the proportion of unaerated sludge to given operating conditions.

These operating conditions are in fact variable, dependent on the effective composition of the raw sewage, and cannot be accommodated in practice by conventional processes, given that the relative plant will be designed generally to structural and functional parameters that are rigid, affording no operational flexibility. The main problem facing designers and operators of biological purification plant for sewage consists essentially in the fact that, when drawing up plans for new installations, it is not known at the design stage what will be the exact nature of the raw input; at this stage, indeed, there is no sewage available for analysis.

What is more, the nature of the sewage can alter during the working life of the plant due to the diversity of industrial effluents; whilst it may be that such changes are permanent, occurring over medium to long periods, it is also common enough to have recurring change, for example due to seasonal factors.

Accordingly, the object of the present invention is to overcome the limitations and the drawbacks of conventional processes and plant.

The object in question consists in setting forth a new process and new plant for the purification of sewage by biological means, capable of providing such operational flexibility as is required in order to effect a treatment adaptable to varying conditions of raw sewage that occur over periods of time, and without any need for modification of or structural alterations to the installation.

The stated object is realized in a new process and plant as characterized in the appended claims, by which notable levels of operational flexibility and versatility are provided.

The invention will now be described in detail, by way of example, with the aid of the accompanying drawings, in which:

fig 1 is a broadly representative schematic diagram illustrating the functional and structural features of plant according to the invention;

fig 2 illustrates a first configuration obtainable with a process and plant as in fig 1;

fig 3 illustrates a second configuration obtainable with a process and plant as in fig 1;

fig 4 illustrates a third configuration obtainable with a process and plant as in fig 1;

fig 5 illustrates a fourth configuration obtainable with a process and plant as in fig 1.

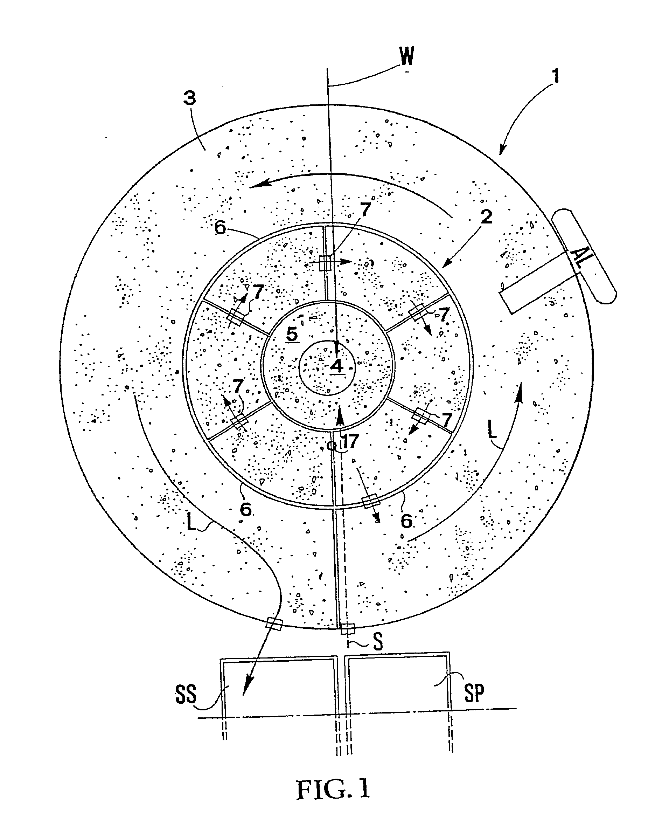

With reference to the drawings, and in particular to fig 1, a conventional process for the biological treatment of sewage consists in a continuous cycle including primary sedimentation SP, brought about by fermentation; the products of such fermentation are elutriated in the flow of sewage W directed into a reactor to undergo a first step of treatment in an unaerated environment 2, followed by further treatment in an aerobic environment 3.

Thereafter, the treated liquid undergoes secondary sedimentation and clarification SS.

In accordance with the invention, the unaerated environment 2 is divided up into a plurality of diversified treatment sectors 6; also, the system comprises at least one recycle S through which activated sludge from the underflow produced in secondary clarification is returned to the reactor, and a further recycle A through which liquid L is directed from the aerobic environment 3 back into one of the treatment sectors 6 of the unaerated environment 2.

The process disclosed also envisages a recycle R of liquid L from one of the treatment sectors 6 of the unaerated environment 2 back into another unaerated sector 6. The unaerated environment 2 is such as to enable a diversity of treatments, and contains no oxygen introduced by means of aeration; according to the invention, the environment 2 in question is partitioned off into an anaerobic sub-environment i.e. free of oxygen and nitrates, and an anoxic sub-environment, i.e. free of oxygen but containing nitrates, each consisting in a plurality of single treatment sectors 6 of which the distribution in terms of position and number will depend upon the selected type of operation, as is explained in due course.

In the example of fig 1, plant according to the invention suitable for the implementation of a biological sewage treatment process as described above comprises a primary sedimentation tank SP, and a reactor, denoted 1 in its entirety, into which the products of fermentation are directed together with the flow of sewage W. In effect, the primary sedimentation tank SP is optional, given that the process can also operate without primary sedimentation if the concentration of short chain fatty acids in the raw sewage is of an acceptable order; thus, W can denote either settled or raw sewage, according to whether primary sedimentation tanks SP are in use or not in use, respectively.

The reactor 1 is embodied preferably as a first unaerated treatment tank 2, and a second aerobic treatment tank 3 that is connected with secondary sedimentation and clarification tanks SS.

More exactly, and with reference to the direction of flow through the system, the reactor 1 comprises a first centrally located and preferably circular chamber 4 in which the raw or settled sewage W is collected, surrounded by a second chamber 5 for collection of the activated sludge, an unaerated treatment tank 2 and an aerobic treatment tank 3, all preferably of annular geometry and disposed concentrically and coaxially around the first chamber 4. The unaerated tank 2 is divided into a plurality of compartments 6 communicating one with the next along the direction of flow, in which diversified types of treatment of the liquid L are effected, and the first and second chambers 4 and 5 can be connected, independently of each other, with all of the compartments 6 of the unaerated tank 2.

The connections in question are effected by means of conduits 8 and 9 and control mechanisms 7; such mechanisms will consist essentially in valves or shutters, etc., capable of allowing or disallowing flow from one chamber or compartment to another, also of regulating volume and velocity of the flow.

Advantageously, and according to the invention, at least one of the compartments 6 of the unaerated tank 2 can be connected directly with at least one other compartment 6 located other than immediately adjacent, by way of a pump denoted 17.

The compartments 6 are divided into two groups, one of which effecting anaerobic treatment, the other anoxic treatment.

Whilst the number of compartments 6 making up the unaerated tank 2 is variable and in no way limited, the example of the drawings, based on design and operational requirements, shows six such divisions denoted 10, 11...15, of which the numbering follows the flow of the liquid L and terminates at the compartment 15 connecting finally with the aerobic tank 3.

The principles on which the process is based give rise to the development of at least four possible configurations applicable to the plant disclosed, which in the basic embodiment described above is capable of operating in all four, simply through the selection of the appropriate open or closed positions of the various control mechanisms 7.

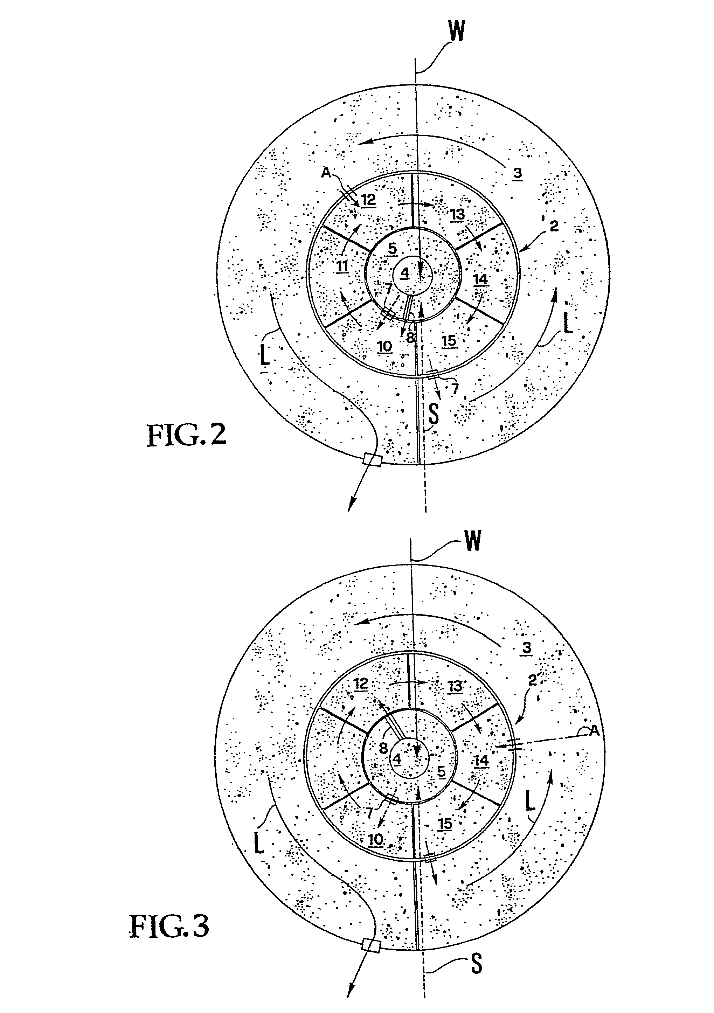

In the first configuration, illustrated in fig 2, the compartments denoted 10 and 11 are allocated to anaerobic treatment, and those denoted 12, 13, 14 and 15 allocated to anoxic treatment. By selecting a corresponding open/closed configuration of the control mechanisms 7, activated sludge recycled to the second chamber 5 via the route denoted S can be directed into the first unaerated compartment 10, simultaneously with but separately from the flow of sewage W from the first chamber 4. Treated liquid L is also recycled from the aerobic tank 3 to the first anoxic compartment 12 by pumping through A.

This first configuration optimizes the extraction of nitrogen, as anoxic volume is maximized through the effect of recycling nitrates by way of route A.

In the second configuration illustrated (fig 3), compartments 10 and 11 are anoxic, 12 and 13 are anaerobic, and 14 and 15 anoxic.

By selecting the appropriate open/closed positions at the various control mechanisms 7, activated sludge recycled through S can be directed from the second chamber 5 into the first compartment 10 of the first of the two anoxic groups. Sewage W passes direct from the first chamber 4 through a conduit 8 into the first 12 of the two anaerobic treatment compartments, whilst liquid L in the aerobic tank 3 is pumped via A back into the first compartment 14 of the second anoxic group.

In this configuration, the first group of two anoxic compartments 10 and 11 serves exclusively to denitrify the nitrates entering with the sludge recycle S, in consequence of which, sludge returned to the first anaerobic compartment 12 contains markedly low concentrations of oxygen and nitrates, and there is a much reduced presence of electron collectors in the unaerated environment by virtue of the oxidating action of heterotrophic bacteria.

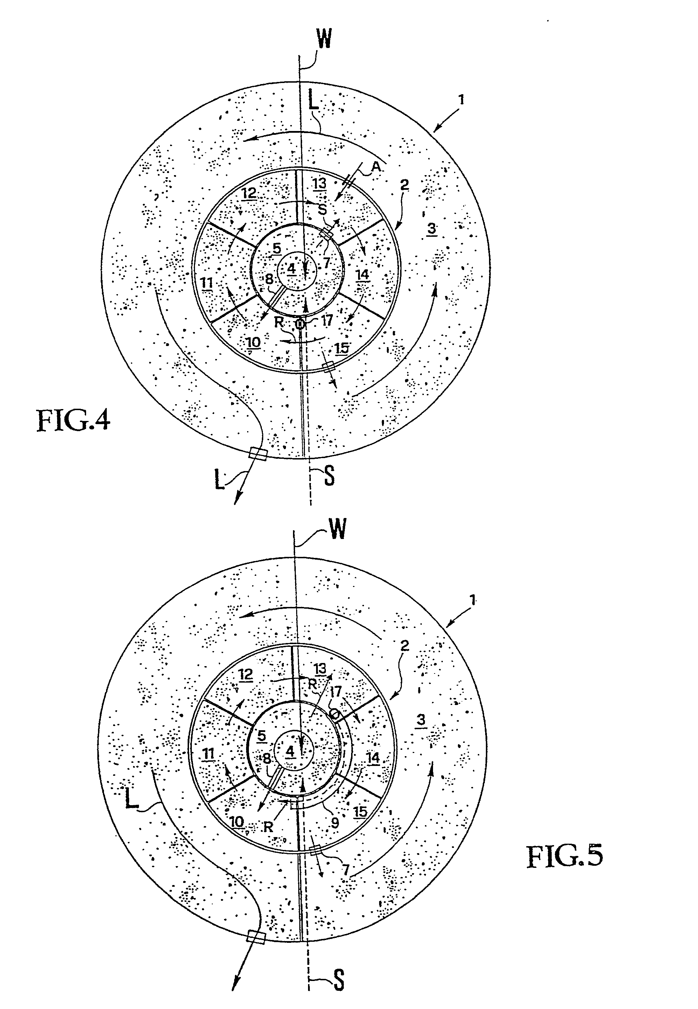

In the third configuration shown in fig 4, sewage W is discharged into the compartment denoted 10, with recycling sludge and liquid (S and A) redirected into the compartment denoted 13, and by introducing a third recycle R, liquid L is also pumped from the last compartment 15 back to the first 10.

By selecting the appropriate open/closed positions at the various control mechanisms 7, sewage W is directed from the first chamber 4 into the first anaerobic treatment compartment 10. Sludge recycled through S is directed from the second chamber 5 to the first anoxic treatment compartment 13, entering simultaneously with but separately from liquid L recycled through A from the aerobic tank 3, and to reiterate, there is the further recycle through R of liquid L from the last compartment 15 of the anoxic group to the first compartment 10 of the anaerobic.

In this configuration, to advantage, the recycle through R contains a quantity of activated sludge notably free of nitrates and oxygen, and moreover, with a low concentration of activated sludge in the anaerobic treatment compartments, the proportion of unaerated mass overall is minimal, and the risk of the bulking in the sludge thus averted.

The fourth configuration illustrated (fig 5) is identical to the third, save for the fact that the liquid L recycled through A is discharged into the compartment denoted 14, and the inter-compartmental recycle R occurs by pumping through a conduit 9 from compartment 13 to compartment 10.

By selecting the appropriate open/closed positions at the various control mechanisms 7, raw or settled sewage W is directed from the first chamber 4 into the first anaerobic compartment 10; sludge recycled through S back to the second chamber 5 is directed into the first compartment 13 of the anoxic group, and liquid L is recycled through A from the aerobic tank 3 to compartment 14 of the anoxic group.

As in the configuration previously described, one has, in addition to the recycles denoted S and A, the further recycle R whereby the contents of an anoxic compartment 13 are returned by the pump 17 to a compartment 10 of the anaerobic group, in this instance through a conduit 9.

In this configuration, the additional recycle through R from the compartment denoted 13 contains reduced quantities of nitrates, regardless of the rate of flow at A, thus positively influencing the extraction of phosphorus by biological means.

To advantage, the aerobic treatment tank 3 of plant according to the invention will be equipped with a device AL of conventional design and operation, by means of which to aerate the liquid.

Needless to say, whilst the particular concentric circular structure of the reactor 1 illustrated reflects a preferred embodiment, use might equally well be made of other designs having the chambers 4 and 5, tanks 2 and 3 and compartments 6 differently arranged, without prejudice to the spirit of the present invention as claimed below; in alternative embodiments, for example, the sectors 6 might be different in number, position and shape, and the recycle options A, R and S might also be other than as described and illustrated.

## Claims

1) A process for the purification of sewage, of the type comprising steps effected in continuous cycle whereby, with or without primary sedimentation (SP) of the raw sewage by fermentation, the products of fermentation are elutriated in a flow of settled sewage (W) directed into a first stage of treatment in an unaerated environment (2), thence to a second stage of treatment in an aerobic environment (3), and thereafter subjected to secondary sedimentation and clarification (SS),
characterized
in that the unaerated environment (2) is divided into a plurality of diversified treatment sectors (6) and the cycle comprises the further steps of: -recycling the products of fermentation (S), consisting in activated sludge returned from the underflow generated in secondary sedimentation and clarification (SS), separately from the flow of sewage (W), into one of the treatment sectors (6) of the unaerated environment (2);
-recycling (A) liquids (L) produced in the aerobic environment (3) into one of the treatment sectors (6) of the unaerated environment (2).

2) A process as in claim 1, comprising the additional step of recycling (R) liquid (L) from one treatment sector (6) of the unaerated environment (2) into another sector (6) of the selfsame environment.

3) A process as in claim 1, wherein the unaerated environment (2) consists in a diversified treatment environment comprising an anaerobic sub-environment free of oxygen and of nitrates, and an anoxic sub-environment free of oxygen but containing nitrates, each divided into a plurality of treatment sectors (6).

4) A process as in claims 1 and 3, wherein activated sludge is recycled (S) simultaneously with but separately from the flow of raw or settled sewage (W), into the first sector (10) of the anaerobic sub-environment, and liquids (L) are recycled (A) from the aerobic environment (3) into the first treatment sector (12) of the anoxic sub-environment following the anaerobic sub-environment, considered in relation to the direction of flow of the liquid (L) toward the final treatment sector (15) from which the liquid discharges ultimately into the aerobic environment (3).

5) A process as in claims 1 and 3, wherein activated sludge is recycled (S) into the first treatment sector (10) of an initial anoxic sub-environment, sewage (W) is directed into a treatment sector (12) of the anaerobic sub-environment, and liquids (L) are recycled (A) from the aerobic environment (3) into the first treatment sector (14) of a further anoxic sub-environment following the anaerobic sub-environment, considered in relation to the direction of flow of the liquid (L) toward the final sector (15) from which discharge occurs ultimately into the aerobic environment (3).

6) A process as in claims 1, 2 & 3, wherein sewage (W) is directed into the first treatment sector (10) of the anaerobic sub-environment, sludge is recycled (S) simultaneously with but separately from liquids recycled (A) from the aerobic environment into the first sector (13) of the anoxic sub-environment, and the contents of the final sector (15) of the anoxic sub-environment are recycled (R) into the first sector (10) of the anaerobic sub-environment, considered in relation to the direction of flow of liquid toward the final sector (15) from which discharge occurs ultimately into the aerobic environment (3).

7) A process as in claims 1, 2 & 3, wherein sewage (W) is directed into the first treatment sector (10) of the anaerobic sub-environment, sludge is recycled (S) into the first sector (13) of the anoxic sub-environment, liquids are recycled (A) from the aerobic environment (3) into the second sector (14) of the anoxic sub-environment after the anaerobic sub-environment, considered in relation to the direction of flow of the liquid toward the final sector (15) from which discharge occurs ultimately into the aerobic environment (3), and the contents of the first treatment sector (13) of the anoxic sub-environment are recycled (R) to the first sector (10) of the anaerobic sub-environment.

8) Plant for the purification of sewage by biological means, of the type operating a continuous cycle and comprising a primary sedimentation tank (SP), the products of fermentation from which are elutriated in the flow of settled sewage (W) directed into a reactor (1) affording a first unaerated treatment tank (2) and a second aerobic treatment tank (3), thence to secondary sedimentation and clarification tanks (SS),
characterized
in that the reactor (1) comprises, arranged in succession along the flow direction of liquids through the system:
  - a first chamber (4) in which raw or settled sewage (W) is collected;
  - a second chamber (5) in which activated sludge is collected;
  - an unaerated treatment tank (2), divided into a plurality of compartments (6) connecting one with the next in succession, in which liquids (L) are subjected to diversified biological treatment;
  - an aerobic treatment tank (3);
and
in that connections are made, singly and separately one from another, between the first and second chambers (4, 5) and all compartments (6) of the unaerated treatment tank (2), by way of respective conduits (8, 9) and control mechanisms (7).

9) Plant as in claim 8, wherein at least one of the compartments (6) of the unaerated treatment tank (2) is connected to at least one other compartment (6) not immediately adjacent, by way of pumping means and conduits (9).

10) Plant as in claim 8, wherein the compartments (6) of the unaerated treatment tank (2) are divided into two groups in which liquids (L) are subjected respectively to anaerobic and to anoxic treatment.

11) Plant as in claim 8, comprising a first chamber (4) of circular section, positioned centrally in the reactor (1), and a second chamber (5), an unaerated treatment tank (2) and an aerobic treatment tank (3) of annular section radiating concentrically in succession from and coaxial with the first chamber, wherein the first and second chambers (4, 5) and the unaerated treatment tank (2) connect one with another by way of control mechanisms (7) and conduits (8, 9).

12) Plant as in claims 8 and 9, wherein selection of a prescribed open/closed configuration of the control mechanisms (7) causes recycled activated sludge (S) in the second collection chamber (5) to be directed simultaneously with but separately from the flow of sewage (W) from the first collection chamber (4) into the first compartment (10) of the group of anaerobic treatment compartments, and liquid in the aerobic treatment tank (3) to be recycled (A) into the first compartment (12) of the group of anoxic treatment compartments after the unaerated group, considered in relation to the direction of flow of the liquid (L) toward the final compartment (15) from which discharge occurs ultimately into the aerobic treatment tank (3).

13) Plant as in claims 8 and 9, wherein selection of a prescribed open/closed configuration of the control mechanisms (7) and of a corresponding conduit (8) causes recycled activated sludge (S) to be directed from the second collection chamber (5) into the first compartment (10) of a first group of anoxic treatment compartments, sewage (W) to flow from the first collection chamber (4) direct into the first compartment (12) of a group of anaerobic treatment compartments, and liquids (L) to be recycled (A) from the aerobic treatment tank (3) into the first compartment (14) of a second anoxic treatment group following the unaerated treatment group, considered in relation to the direction of flow of the treated liquid (L) toward the final compartment (15) from which discharge occurs ultimately into the aerobic environment (3).

14) Plant as in claims 8 and 9, wherein selection of a prescribed open/closed configuration of the control mechanisms (7) and of a corresponding conduit (8) causes sewage (W) to flow from the first collection chamber (4) into the first compartment (10) of a group of anaerobic treatment compartments, recycled sludge (S) in the second chamber (5) to be directed simultaneously with but separately from liquids recycled (A) from the aerobic treatment tank (3) into the first compartment (13) of the group of anoxic treatment compartments after the unaerated group, considered in relation to the direction of flow of the liquid toward the sector (15) from which discharge occurs ultimately into the aerobic treatment tank (3), and the contents of the final compartment (15) of the anoxic treatment group to be recycled (R) into the first compartment (10) of the anaerobic treatment group.

15) Plant as in claims 8 and 9, wherein selection of a prescribed open/closed configuration of the control mechanisms (7) causes sewage (W) to flow from the first chamber (4) into the first compartment (10) of a group of anaerobic treatment compartments, recycled sludge (S) in the second chamber (5) to flow into the first compartment (13) of a group of anoxic treatment compartments, liquids (L) to recycle (A) from the aerobic treatment tank (3) into the second compartment (14) of the group of anoxic treatment compartments after the anaerobic, considered in relation to the direction of flow of the liquid toward the final compartment (15) from which discharge occurs ultimately into the aerobic treatment tank (3), and the contents of the first compartment (13) of the group of anoxic treatment compartments to recycle (R) by way of a relative conduit (9) and control mechanisms (7) back to the first compartment (10) of the anaerobic treatment group, which is positioned other than immediately adjacent.

16) Plant as in claim 8, wherein the aerobic treatment tank (3) is provided with conventional devices for the aeration of liquids.

FIG. 1

FIG.2

FIG.3

FIG.4

FIG.5

European Patent
Office

# EUROPEAN SEARCH REPORT

Application Number

EP 91 83 0193

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-E-32 429 (SPECTOR,M.L.)<br><br>* column 5, line 60 - column 7, line 14; figure 2 * | 1,3,4,8,10 | C02F3/30<br>C02F3/12 |
| X | KORRESPONDENZ ABWASSER.<br>vol. 36, no. 3, March 1989, AUGUSTIN DE<br>pages 337 - 348;<br>ATV-ARBEITSBERICHTE: 'BIOLOGISCHE<br>PHOSPHORENTFERNUNG '<br>* page 343 - page 344; figure 3 * | 2,5 | |
| X | JOURNAL OF THE WATER POLLUTION CONTROL FEDERATION.<br>vol. 60, no. 10, October 1988, WASHINGTON US<br>pages 1833 - 1842;<br>DAIGGER,G.T. ET AL.: 'Enhanced secondary treatment incorporating biological nutrient removal. '<br>* page 1833, paragraph 6 - page 1834, paragraph 1; figure 1 * | 6 | |
| Y | EP-A-100 568 (METALLGESELLSCHAFT, AG)<br>* page 5, line 22 - line 36 * | 1,3,4 | TECHNICAL FIELDS SEARCHED (Int. Cl.5)<br><br>C02F |
| Y | CHEMICAL ENGINEERING.<br>vol. 86, no. 28, December 1979, NEW YORK US<br>pages 34 - 35;<br>GALDIERI,J.V.: 'Biological phosphorus removal '<br>* the whole document * | 1,3,4 | |

The present search report has been drawn up for all claims

| Place of search | Date of completion of the search | Examiner |
|---|---|---|
| THE HAGUE | 30 AUGUST 1991 | GONZALEZ ARIAS M.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)